(19) Europäisches Patentamt
European Patent Office
Office européen des brevets

(11) Veröffentlichungsnummer: **0 301 350 B1**

(12) **EUROPÄISCHE PATENTSCHRIFT**

(45) Veröffentlichungstag der Patentschrift: **14.09.94**

(51) Int. Cl.5: **C09B 67/22**, C09B 35/04, D06P 1/39

(21) Anmeldenummer: **88111506.7**

(22) Anmeldetag: **18.07.88**

Die Akte enthält technische Angaben, die nach dem Eingang der Anmeldung eingereicht wurden und die nicht in dieser Patentschrift enthalten sind.

(54) **Disazofarbstoffe.**

(30) Priorität: **29.07.87 DE 3725082**

(43) Veröffentlichungstag der Anmeldung:
**01.02.89 Patentblatt 89/05**

(45) Bekanntmachung des Hinweises auf die Patenterteilung:
**14.09.94 Patentblatt 94/37**

(84) Benannte Vertragsstaaten:
**CH DE FR GB LI**

(56) Entgegenhaltungen:
**DE-A- 2 050 700**
**DE-A- 3 236 238**
**DE-C- 548 680**
**US-A- 2 612 496**
**US-A- 4 051 123**

(73) Patentinhaber: **BAYER AG**

**D-51368 Leverkusen (DE)**

(72) Erfinder: **Kunde, Klaus, Dr.**
**Moltkestrasse 5**
**D-5206 Neunkirchen (DE)**

**EP 0 301 350 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zum Färben von cellulosehaltigen Materialien und Leder mit Farbstoffen der allgemeinen Formeln

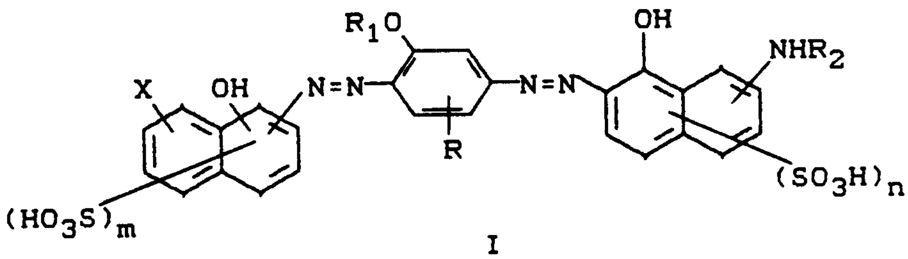

I

und

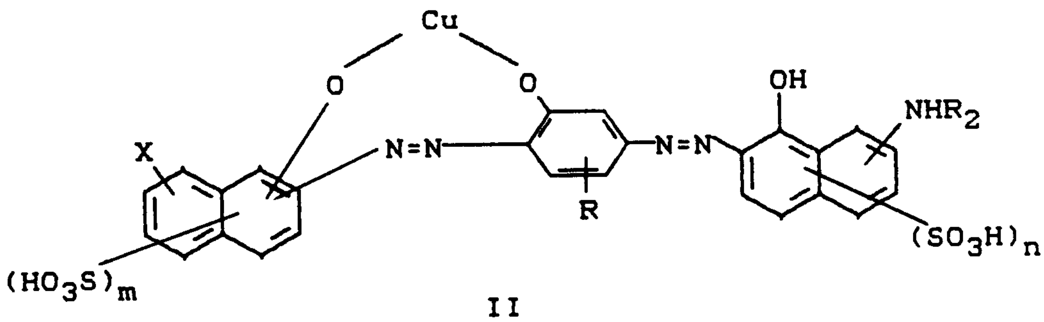

II

und deren Salzen,
worin

- X Wasserstoff, Alkoxy oder $NHR_3$,
- R Wasserstoff, Alkyl oder Alkoxy,
- $R_1$ Alkyl,
- $R_2$ Wasserstoff, Aryl,
- $R_3$ Wasserstoff, Alkyl, Alkylcarbonyl, Alkylsulfonyl, Aryl, Arylcarbonyl, Arylsulfonyl, Aralkyl, Aralkylcarbonyl oder Aminocarbonyl

und
m und n 1 oder 2 bedeuten, und die Summe von m und n mindestens 3 ist, und
worin die genannten Substituenten ihrerseits durch in der Farbstoffchemie übliche nichtionische Reste, Carbon- und Sulfonsäuregruppen substituiert sein können.

In den Formeln (I) und (II) wird vorzugsweise unter Aryl Phenyl und unter Aralkyl Benzyl verstanden,

Beispiele für nichtionische Reste sind Halogen, Hydroxy, $C_1$-$C_4$-Alkoxy, Acetoxy und im Falle von Arylresten auch $C_1$-$C_4$-Alkyl.

In einem bevorzugten Verfahren werden Farbstoffe der allgemeinen Formeln

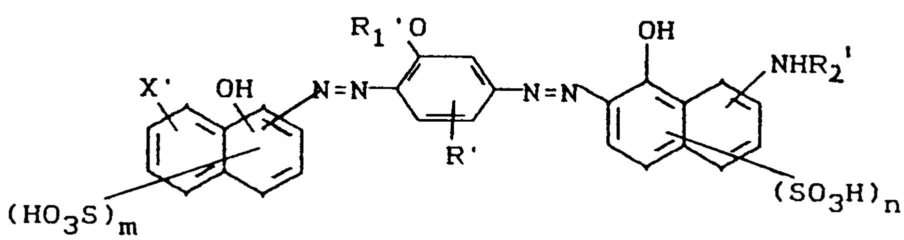

III

und

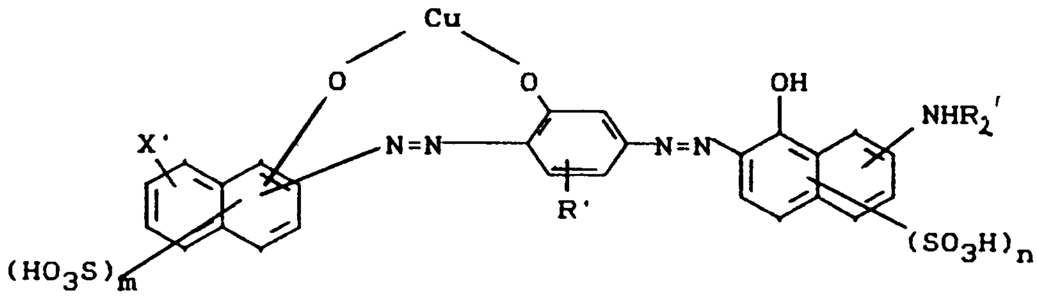

IV

worin

R' Wasserstoff, $C_1$-$C_4$-Alkyl oder $C_1$-$C_4$-Alkoxy,

$R_1$' $C_1$-$C_4$-Alkyl,

$R_2$' Wasserstoff oder Phenyl,

X' Wasserstoff, $C_1$-$C_2$-Alkoxy oder $NHR_3$',

$R_3$' Wasserstoff, $C_1$-$C_4$-Alkyl, $C_1$-$C_4$-Alkylcarbonyl, $C_1$-$C_4$-Alkylsulfonyl, Phenylcarbonyl, Phenylsulfonyl oder Benzylcarbonyl, deren Phenylreste durch $SO_3H$ oder COOH substituiert sein können, oder Aminocarbonyl und

m und n 1 oder 2 bedeuten, und die Summe von m und n mindestens 3 ist,

verwendet.

Gegenstand der Erfindung sind außerdem Farbstoffe der allgemeinen Formeln

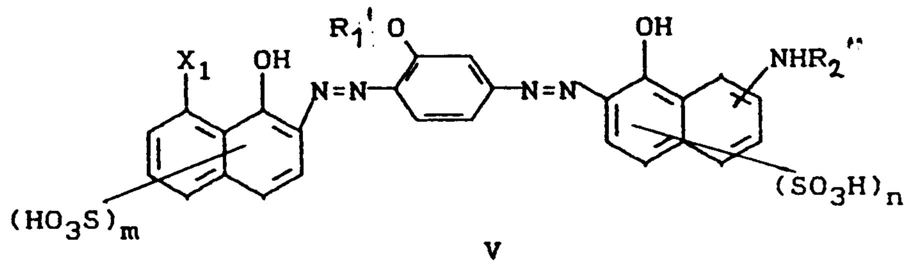

V

und

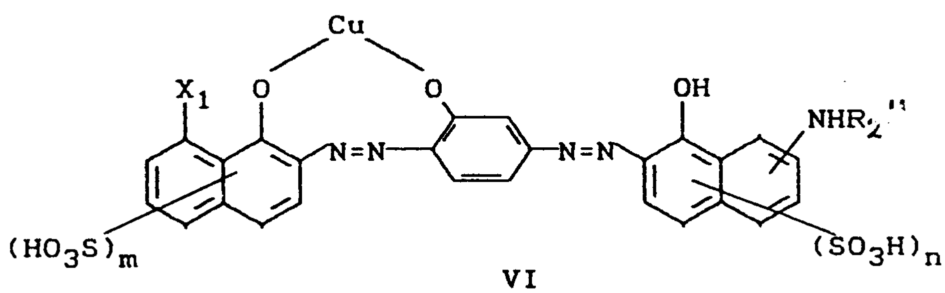

VI

und ihre Salze,

worin

$X_1$ Wasserstoff oder $C_1$-$C_4$-Alkoxy bedeutet,

$R_1$', m und n die genannte Bedeutung haben, und

$R_2$'' Wasserstoff, $C_1$-$C_4$-Alkyl, $C_1$-$C_4$-Alkylcarbonyl, $C_1$-$C_4$-Alkylsulfonyl, Phenylcarbonyl, Phenylsulfonyl oder Benzylcarbonyl, deren Phenylreste durch $SO_3H$ oder COOH substituiert sein können, oder Aminocarbonyl bedeutet,

sowie

Verfahren zum Färben von cellulosehaltigen Materialien und Leder mit diesen Farbstoffen.

Die Herstellung der Farbstoffe (I) und (II) erfolgt durch Diazotierung von Verbindungen der allgemeinen Formel

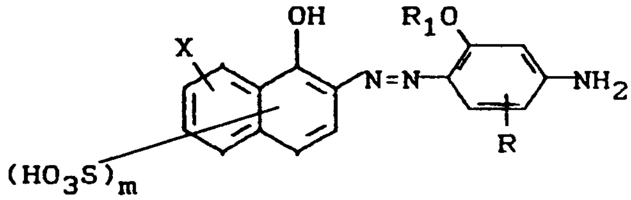

VII

Kupplung mit Verbindungen der allgemeinen Formel

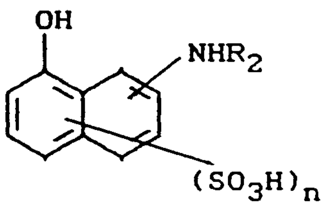

VIII

und gegebenenfalls Behandlung mit Kupfer-(II)-Salzen.

Von den Farbstoffen der Formeln (V) und (VI) sind die der Formeln

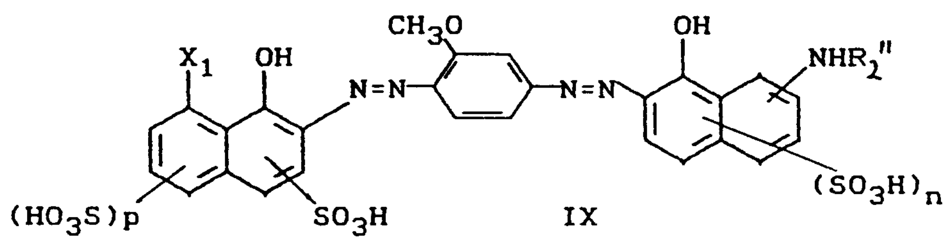

IX

und

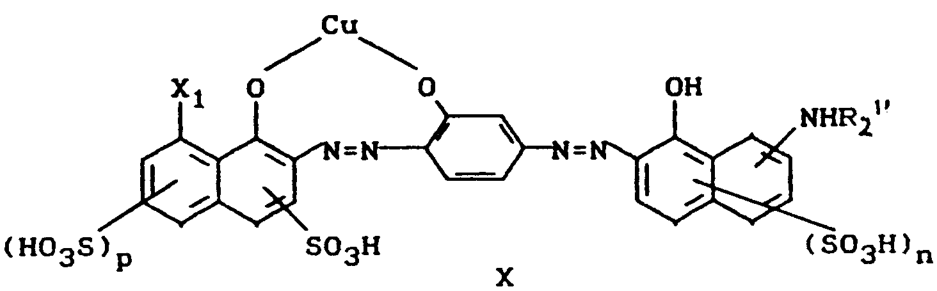

X

bevorzugt, worin

| | |
|---|---|
| $X_1$, $R_2''$ und n | die vorstehend genannte Bedeutung haben, |
| p | für 0 oder 1 steht und |

n + p = 2 ist.

Ein weiterer Gegenstand der Erfindung sind Farbstoffe der allgemeinen Formeln

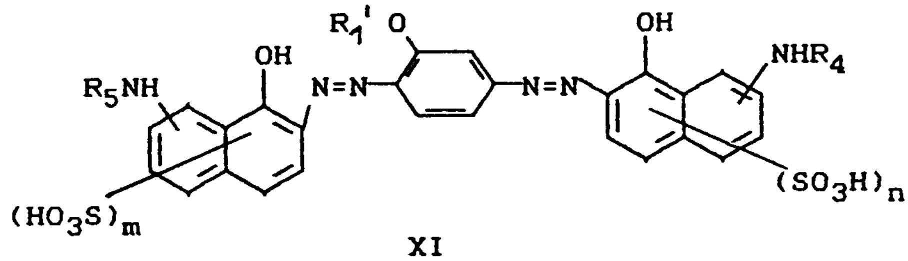

XI

und

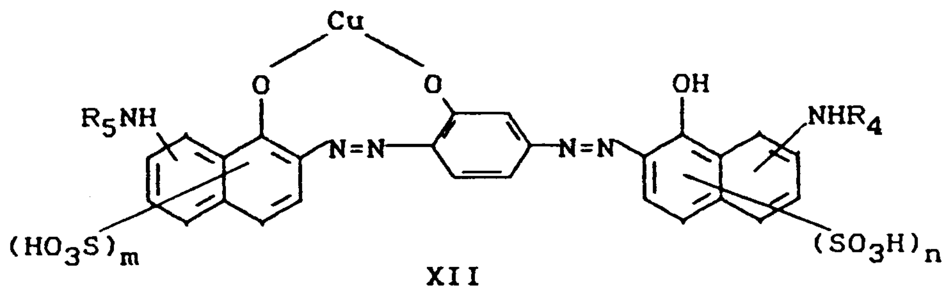

XII

und ihre Salze,
worin

$R_4$ und $R_5$ für Wasserstoff, Acetyl, Benzoyl oder Phenyl stehen und

$R_1$', m und n die in den Formeln (III) und (IV) angegebene Bedeutung haben, sowie Verfahren zum Färben von cellulosehaltigen Materialien mit diesen Farbstoffen.

Von den Farbstoffen der Formeln (XI) und (XII) sind die der Formeln

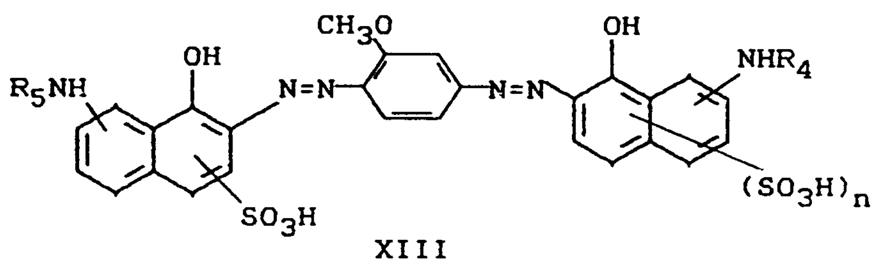

XIII

und

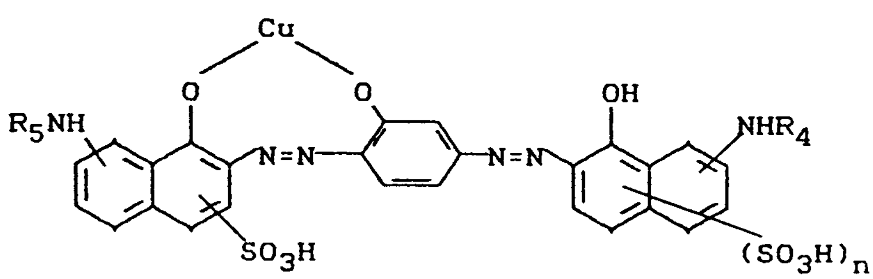

XIV

bevorzugt, worin
$R_4$, $R_5$ und n die vorstehend genannte Bedeutung haben.

Die Farbstoffe werden im allgemeinen in Form ihrer Salze zum Färben eingesetzt oder auch in den Handel gebracht, insbesondere der Alkalisalze (Li, Na, K), der Ammoniumsalze, Mono-, Bis- oder Tris-$C_1$-$C_4$-alkyl-ammoniumsalze, insbesondere auch der $C_1$-$C_4$-Alkanol-ammoniumsalze.

Bevorzugte Ammoniumslze sind dabei solche mit dem Kation

$$\overset{(+)}{R_6-N(R_7)_3}$$

worin

R₆ → $R_6$ H, $C_1$-$C_4$-Alkyl, gegebenenfalls substituiert durch OH oder Hydroxy-$C_1$-$C_4$-alkoxy, insbesondere $CH_3$, $C_2H_5$, $CH_2$-$CH_2$-OH, $CH_2$-$CHOHCH_3$, $CH_2$-$CH_2$-$OCH_2$-$CH_2$-OH und

$R_7$ $C_1$-$C_4$-Hydroxyalkyl, $C_1$-$C_4$-Hydroxyalkoxy-alkyl, insbesondere $CH_2$-$CH_2$-OH, $CH_2$-$CHOHCH_3$, $CH_2$-$CH_2$-$OCH_2$-$CH_2$-OH bedeuten.

Die Farbstoffe können auch als konzentrierte, wäßrige Lösungen eingesetzt werden.

Die Verbindungen der allgemeinen Formel (VII) erhält man in an sich bekannter Weise, z.B. durch Reduktion der Verbindungen der Formel

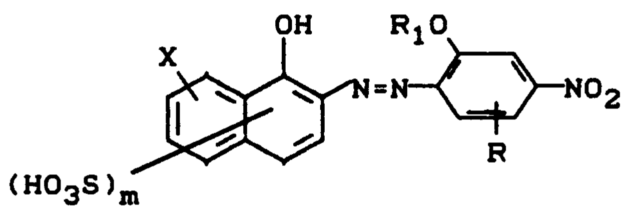

XV

worin

X, R, $R_1$ und m die oben genannte Bedeutung besitzen, mit Natrium- oder Ammoniumsulfid.

Verbindungen der allgemeinen Formel (XV) erhält man z.B. durch Kuppeln von Diazoniumsalzen aus gegebenenfalls durch Alkyl oder Alkoxy substituierten 5-Nitro-2-aminophenylalkylethern mit Hydroxynaphthalin-mono- und disulfonsäuren, z.B.:

4-Hydroxynaphthalin-1-sulfonsäure, 5-Hydroxy-naphthalin-1-sulfonsäure, 4-Hydroxy-naphthalin-2-sulfonsäure, 4-Hydroxynaphthalin-2,7-disulfonsäure, 4-Hydroxynaphthalin-1,5-disulfonsäure, 4-Hydroxynaphthalin-2,5-disulfonsäure, 5-Methoxy-4-hydroxynaphthalin-1-sulfonsäure 5-Ethoxy-4-hydroxynaphthalin-2,7-disulfonsäure und 5-Methoxy-4-hydroxynaphthalin-2-sulfonsäure.

Als Kupplungskomponenten der Formel (VIII) werden Aminonaphtholmono- und disulfonsäuren verwendet, z.B.:

4-Hydroxy-6-aminonaphthalin-2-sulfonsäure, 4-Hydroxy-7-aminonaphthalin-2-sulfonsäure, 5-Hydroxy-4-aminonaphthalin-1-sulfonsäure, 4-Hydroxy-5-aminonaphthalin-2-sulfonsäure, 4-Hydroxy-8-aminonaphthalin-2-sulfonsäure, 4-Hydroxy-7-aminonaphthalin-1-sulfonsäure, 4-Hydroxy-6-aminonaphthalin-1-sulfonsäure, 4-Hydroxy-7-aminonaphthalin-1,5-disulfonsäure, 5-Hydroxy-2-aminonaphthalin-1,7-disulfonsäure, 5-Hydroxy-3-aminonaphthalin-2,7-disulfonsäure, 4-Hydroxy-5-aminonaphthalin-2,7-disulfonsäure, 5-Hydroxy-4-aminonaphthalin-1,7-disulfonsäure, 5-Hydroxy-4-aminonaphthalin-1,3-disulfonsäure; 4-Hydroxy-6-anilinonaphthalin-2-sulfonsäure, 4-Hydroxy-7-anilinonaphthalin-2-sulfonsäure und 4-Hydroxy-6-(3-sulfophenylanilinonaphthalin)-2-sulfonsäure.

Die Verbindungen der allgemeinen Formel (VII) können direkt oder indirekt diazotiert werden. Die Kupplung erfolgt bei pH-Werten zwischen 6 und 10, vorzugsweise zwischen 8 und 9 bei Temperaturen zwischen 0°C und 30°C.

Die Acylaminogruppen $NHR_2$ und $NHR_3$ können nach bekannten Verfahren in die freie Aminogruppe überführt werden.

Die gegebenenfalls durchzuführende Überführung in die Kupferkomplexe erfolgt in an sich bekannter Weise, indem man die Farbstoffe der allgemeinen Formel (I) in wäßriger Lösung mit Kupfer-II-Salzen, z.B. Kupfer-II-sulfat oder Kupfer-II-acetat, in Gegenwart einer Base, z.B. eines Alkanolamins, erhitzt.

Die Farbstoffe werden z.B. nach Zugabe von Salz isoliert und getrocknet. Es können aber auch die Kupplungslösungen oder Suspensionen über einen Walzen- oder Sprühtrockner geführt werden.

Ebensogut können aus den feuchten Pasten der Farbstoffe konzentrierte, wäßrige Lösungen hergestellt werden, z.B. indem man Suspensionen dieser Farbstoffe in Wasser einer Entsalzung, z.B. durch Druckpermeation unterwirft.

Man kann ebenfalls zu konzentrierten, wäßrigen Lösungen der Farbstoffe gelangen, indem man die aus den Verbindungen der allgemeinen Formel (VII) entstehenden Diazoniumverbindungen isoliert und mit Hilfe von Lithiumsalzen und/oder Alkanolaminen mit den Kupplungskomponenten der allgemeinen Formel (VIII) kuppelt.

Die Farbstoffe färben cellulosehaltige Materialien, insbesondere Papier, Baumwolle und Viskose sowie Leder in blauen Tönen mit guten Naß- und Lichtechtheiten.

Die Farbstoffe können nach allen in der Papier- und Textilindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -Sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Beim Färben von Leder gelangen die Farbstoffe bevorzugt als Flüssigpräparationen zur Anwendung, die sich gleichmäßig zum Spritzfärben und zum Färben im Faß und auf Durchlauf-Mehrzweckmaschinen eignen.

Die mit den erfindungsgemäßen Farbstoffen erhaltenen Papierfärbungen zeichnen sich durch gute Licht- und Naßechtheit (Ausblutechtheit) sowie Säure-, Alkali- und Alaun-Echtheit aus. Auch auf die Brillanz und Klarheit der Farbtöne ist hinzuweisen. Ferner ist das Kombinationsverhalten mit geeigneten Farbstoffen sehr gut.

Aus US-A-2,612,496 sind ungekupferte Disazoverbindungen auf Basis von N-Acylaminonaphtholsulfonsäuren bekannt, die zum Färben von pflanzlichen und tierischen Fasern, organischen Kolloiden sowie für photographische Zwecke geeignet sind.

Aus DE-A-3 236 238 sind 1:1-Metallkomplexe sulfogruppenhaltiger Disazoverbindungen bekannt, sowie deren Verwendung zum Färben von Cellulose und Leder.

Beispiel 1

65,7 g der Verbindung der Formel

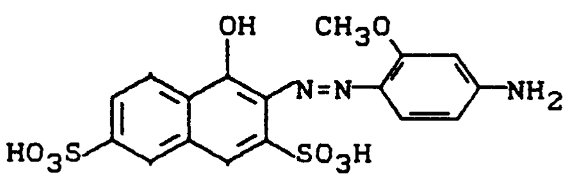

a

werden in
800 ml Wasser neutral gelöst und mit
10 g $NaNO_2$ versetzt; diese Lösung läßt man bei 0 °C-5 °C in eine Vorlage von
50 ml konzentrierter Salzsäure und
200 g Eis eintropfen.
45,7 g 4-Hydroxy-7-anilinonaphthalin-2-sulfonsäure werden in
400 ml Wasser bei 10 °C mit
8 g NaOH gelöst. Zu dieser Lösung gibt man langsam die Suspension der Diazoniumverbindung zu, wobei der pH-Wert durch Zugabe von Soda-Lösung auf 9 gehalten wird. Der Farbstoff wird bei 60 °C durch Zugabe von
240 g Salz ausgefällt, isoliert und getrocknet.

Er färbt Baum- und Zellwolle, Papier und Leder in blauen Tönen.

Beispiel 2

61,2 g des Farbstoffs aus Beispiel 1 werden in 1000 ml Wasser bei 50 °C gelöst. Ein Lösung von
20 g Kupfersulfat x $5H_2O$ in
100 ml Wasser und

40 g Diethanolamin wird zur Lösung des Farbstoffes gegeben, dann wird 5h bei 95 °C gerührt. Nach Beendigung der Kupferung wird der Farbstoff durch Zugabe von
120 g Salz ausgefällt, isoliert und getrocknet.
Er färbt Baum- und Zellwolle, Papier und Leder in blauen Tönen.

Beispiel 3-8

Verwendet man statt der in Beispiel 1 eingesetzten Kupplungskomponente äquimolare Mengen 4-Hydroxy-7-aminonaphthalin-2-sulfonsäure, 4-Hydroxy-6-aminonaphthalin-2-sulfonssäure, 4-Hydroxy-7-acetylaminonaphthalin-2-sulfonsäure, 4-Hydroxy-6-acetylaminonaphthalin-2-sulfonsäure, 4-Hydroxy-7-benzoylaminonaphthalin-2-sulfonsäure oder 4-Hydroxy-6-benzoylaminonaphthalin-2-sulfonsäure, so erhält man ebenfalls Farbstoffe, die Papier, Baumwolle und Viskose in blauen Tönen färben.

Beispiele 9-14

Verwendet man statt des in Beispiel 2 eingesetzten Farbstoffes aus Beispiel 1 die Farbstoffe aus den Beisipelen 3-8, so erhält man ebenfalls neue Kupferkomplex-Farbstoffe, die Baum- und Zellwolle, Papier und Leder in blauen Tönen färben.

Beispiel 15

75,8 g der Verbindung der Formel

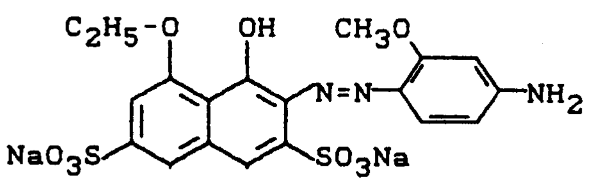

b

werden in
800 ml Wasser neutral gelöst; nach Zugabe von
10 g $NaNO_2$ läßt man diese Lösung in eine Vorlage von
50 ml konzentrierter Salzsäure und
200 g Eis eintropfen,
40,7 g 4-Hydroxy-7-acetylaminonaphthalin-2-sulfonsäure werden in
500 ml Wasser bei 10 °C neutral gelöst; zu dieser Lösung läßt man langsam die Suspension der Diazoniumverbindung zutropfen, wobei man den pH-Wert mit Hilfe von Soda-Lösung auf 7-7,5 hält. Der Farbstoff wird bei 60 °C durch Zugabe von
240 g Salz ausgefällt, isoliert und getrocknet.
Er färbt Papier, Baumwolle und Viskose in blauen Tönen.

Beispiele 16-18

Verwendet man statt der in Beispiel 15 eingesetzten Kupplungskomponente äquimolare Mengen 4-Hydroxy-7-aminonaphthalin-2-sulfonsäure oder ihr N-Phenyl-oder N-Benzoyl-Derivat, so erhält man ebenfalls Farbstoffe, die Papier, Baumwolle und Leder in blauen Tönen färben.

Beispiel 19

60,7 g des Farbstoffes aus Beispiel 15 werden in
1000 ml Wasser bei 50 °C gelöst. Dazu gibt man eine Lösung von
20 g Kupfer-II-sulfat x 5 $H_2O$ in
100 ml Wasser und
40 g Diethanolamin; dann wird 8 Stunden bei 95 °C gerührt. Nach Beendigung der Kupferung wird der Farbstoff durch Zugabe von

120 g Salz ausgefällt, isoliert und getrocknet.

Er färbt Baum- und Zellwolle, Papier und Leder in blauen Tönen.

Beispiele 20-22

Verwendet man statt des in Beispiel 19 eingesetzten Farbstoffes die Farbstoffe aus den Beispielen 16-18, so erhält man ebenfalls Kupferkomplex-Farbstoffe, die Papier, Baumwolle und Leder in blauen Tönen färben.

Beispiel 23

54,1 g der Verbindung der Formel

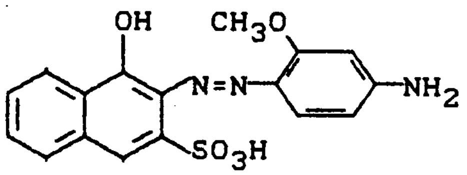

c

1500 ml Wasser mit Natronlauge bei pH 10 gelöst; man gibt
10 g $NaNO_2$ zu und läßt die Lösung in eine Vorlage von
400 g Eis und
60 ml konzentrierter Salzsäure eintropfen.
61,3 g 7-Benzoylamino-4-hydroxynaphthalin-1,5-disulfonsäure werden bei 10 ° C in
500 ml Wasser neutral gelöst; zu dieser Lösung läßt man langsam die Suspension der Diazoniumverbindung zutropfen, wobei man den pH-Wert mit Hilfe von Soda-Lösung bei 9 hält. Der Farbstoff wird bei 60 ° C durch Zugabe von
400 g Salz ausgefällt, isoliert und getrocknet.

Er färbt Baum- und Zellwolle, Papier und Leder in blauen Tönen.

Beispiel 24

65,7 g der Verbindung der Formel

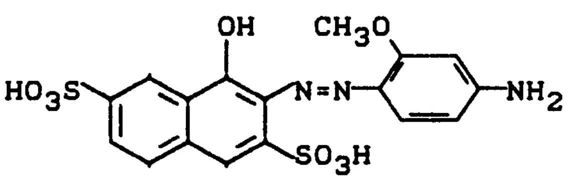

d

800 ml Wasser neutral gelöst und mit
10 g $NaNO_2$ versetzt; diese Lösung läßt man bei 0 ° C-5 ° C in eine Vorlage von
50 ml konzentrierter Salzsäure und
200 g Eis eintropfen.
45,7 g 4-Hydroxy-7-phenylaminonaphthalin-2-sulfonsäure und
8 g NaOH werden in
500 ml Wasser bei 10 ° C gelöst. Zu dieser Lösung gibt man langsam die Suspension der Diazoniumverbindung zu, wobei der pH-Wert mit Hilfe von Soda-Lösung auf 9 gehalten wird. Der Farbstoff wird bei 60 ° C durch Zugabe von
240 g Salz ausgefällt, isoliert und getrocknet.

Er färbt Papier, Baumwole und Leder in blauen Tönen.

Beispiele 25 und 26

Verwendet man statt des in Beispiel 19 eingesetzten Farbstoffes die Farbstoffe aus den Beispielen 23 und 24, so erhält man ebenfalls neue Kupferkomplex-Farbstoffe, die Baum- und Zellwolle, Papier und Leder in blauen Tönen färben.

Färbebeispiele

Beispiel 1 - Druckpapier -

800 kg Sulfatcellulose, gebleicht und
200 kg Sulfitcellulose, gebleicht, w erden in einem Pulper, in dem
14 cbm Fabrikationswasser vorgelegt sind, eingetragen und bis zur Stippenfreiheit aufgeschlagen. Der Aufschlagvorgang benötigt 30 Minuten. Anschließend wird der aufgeschlagene Zellstoff in eine Ableerbütte überführt. Aus der Ableerbütte wird die Zellstoffsuspension mit Stoffmühlen auf einen Mahlgrad von 25°SR (nach Schopper-Riegler) gemahlen und gelangt anschließend in eine Mischbütte. In der Mischbütte erfolgen als weitere Zusätze
250 kg Kaolin Ia (als Füllstoff) sowie 1 % Farbstoff berechnet auf absolut trockene Faser (in Form einer wäßrigen Lösung von 20 g/l).
Nach 15 Minuten Aufziehzeit werden 2 % Harzleim (absolut trocken) sowie nach 10 Minuten 4 % Alaun (beides berechnet auf absolut trockene Cellulose) zugefügt. pH der Stoffsuspension: 5,3. Dieser Papierstoff gelangt über den in dieser Industrie üblichen Prozessablauf auf die Papiermaschine.

Beispiel 2 - Tissuepapier -

1000 kg Sulfatcellulose, gebleicht, werden in einen Pulper, in dem
14 cbm Farbrikationswasser vorgelegt sind, eingetragen und bis zur Stippenfreiheit aufgeschlagen. Der Aufschlagvorgang benötigt 30 Minuten. Anschließend wird der aufgeschlagene Stoff in eine Ableerbütte überführt. Aus der Ableerbütte wird der Zellstoff mit Stoffmühlen auf einen Mahlgrad von 25°SR gemahlen und gelangt anschließend in eine Mischbütte. In der Mischbütte erfolgt die Zugabe von 1 % Farbstoff berechnet auf absolut trockene Faser, in Form einer wäßrigen Lösung von 20 g/l. pH der Stoffsuspension; 7.
Nach 15 Minuten Aufziehzeit gelangt dieser Papierstoff über den in dieser Industrie üblichen Prozessablauf auf die Papiermaschine.

Beispiel 3 - Sizepress Applikation -

In
1000 ltr. einer 10 %igen anionischen Stärkelösung werden
5 kg Farbstoff gelöst mit einer Leimpresse auf das Papier appliziert. Der Auftrag der Lösung beträgt 1,5 g/m$^2$ absolut trocken je Seite.

Beispiel 4 - Baumwollgarn -

In einem Färbebad stellt man bei 40°C eine Lösung von
0,2 g Natriumcarbonat
4 g Natriumsulfat und
1,5 g des nach Beispiel 1 hergestellten Farbstoffs in
250 ml Wasser her. In der fertigen Färbeflotte hält man anschließend
10 g Baumwoll-Garm ständig in Bewegung, erhöht die Temperatur auf 95°C und färbt 45 Minuten bei dieser Temperatur weiter. Das gefärbte Baumwoll-Garn wird darauf der nur noch schwach gefärbten Restflotte entnommen und noch anhaftende Restflotte durch Auswringen entfernt. Anschließend spült man das gefärbte Material mit kaltem Wasser und trocknet es bei 60°C. Man erhält eine blaue Färbung hoher Farbstärke mit guten Echtheitseigenschaften, insbesondere guter Wasser-, Wasch- und Schweißechtheit.

Beispiel 5 - Leder -

100 Teile chromgegerbtes und mit synthetischen Gerbstoffen nachgegerbte Kalbfell der Falzstärke 0,7 mm werden zunächst 60 Minuten lang in 1000 Teilen Wasser und 2 Teilen technischem Ammoniak bei

50 ° C broschiert.

Man läßt die Flotte ablaufen, wäscht mit 1000 Teilen 50 ° C warmen Wasser und färbt in 500 Teilen frischem Wasser und einem Teil eines Penetrators mit einem Teil des ungelösten Farbstoffes von Beispiel 1 bei 50 ° C. Nach einer Färbedauer von 60 Minuten wird das Bad mit 1,2 Teilen 85 %iger Ameisensäure bis pH 3,5 abgesäuert, und das Leder in einer neuen Flotte von 500 Teilen Wasser mit 0,6 Teilen des Farbstoffes überfärbt. Nach der sich anschließenden Fixierung mit 0,6 Teilen 85 %iger Ameisensäure folgen ein Waschgang, eine Nachbehandlung mit Hydrophobierungsmitteln und ein Spülgang. Trocknung, Millen und Spannen ergeben schließlich ein gut durchfärbtes Bekleidungsleder in einem blauen Farbton.

Beispiel 27

53,2 g der Verbindung der Formel

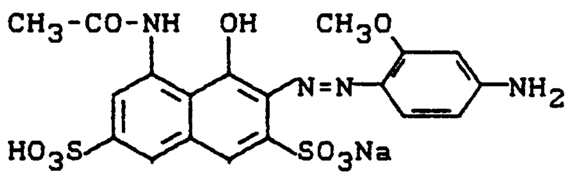

e

werden in
800 ml Wasser neutral gelöst und mit
10 g $NaNO_2$ versetzt, diese Lösung läßt man bei 0-5 ° C in eine Vorlage von
50 ml konzentrierter Salzsäure und
200 g Eis eintropfen.
40,7 g 4-Hydroxy-7-acetylaminonaphthalin-2-sulfonsäure werden in
500 ml Wasser bei 10 ° C neutral gelöst; zu dieser Lösung läßt man langsam die Suspension der Diazoniumverbindung zutropfen, wobei man den pH-Wert mit Hilfe von Soda-Lösung auf 7-7,5 hält. Der Farbstoff wird bei 60 ° C durch Zugabe von
240 g Salz ausgefällt, isoliert und getrocknet.

Er färbt Papier, Baumwolle und Viskose in blauen Tönen.

Beispiel 28

Man verfährt wie in Beispiel 27, setzt aber nach Beendigung der Kupplung
64 g NaOH zu und erwärmt drei Stunden auf 95 ° C, wobei die Acetylreste abgespalten werden, ehe man das Produkt ausfällt und isoliert, und erhält einen Farbstoff, der Baum- und Zellwolle, Papier und Leder in blauen Tönen färbt.

Beispiele 29-31

Verwendet man statt der in Beispiel 27 eingesetzten Kupplungskomponente äquimolare Mengen 4-Hydroxy-7-phenylaminonaphthalin-2-sulfonsäure, 4-Hydroxy-7-Benzoylaminonaphthalin-2-sulfonsäure oder 4-Hydroxy-6-acetylaminonaphthalin-2-sulfonsäure, so erhält man ebenfalls Farbstoffe die Papier, Baumwolle und Leder in blauen Tönen färben.

Beispiel 32

53,2 g der Verbindung der Formel

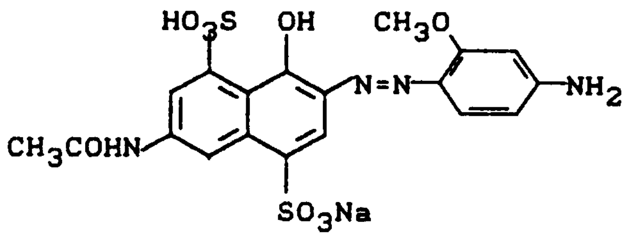

f

800 ml Wasser neutral gelöst und mit
10 g $NaNO_2$ versetzt; diese Lösung läßt man bei 0-5 ° C in eine Vorlage von
50 g konzentrierter Salzsäure und
200 g Eis eintropfen.
49,7 g 4-Hydroxy-7-benzoylaminonaphthalin-2-sulfonsäure werden in
500 ml Wasser bei 10 ° C suspendiert; zu dieser Suspension läßt man langsam die Suspension der Diazoniumverbindung zulaufen, wobei man den pH-Wert mit Hilfe von Sodalösung auf 7-7,5 hält.

Der Farbstoff färbt Papier, Baumwolle und Viskose in blauen Tönen.

Beispiele 33-37

Verwendet man statt der in Beispiel 32 eingesetzten Kupplungskomponente äquimolare Mengen 4-Hydroxy-7-acetylaminonaphthalin-2-sulfonsäure, 4-Hydrox-7-phenylaminonaphthalin-2-sulfonsäure, 4-Hydroxy-6-acetylaminonaphthalin-2-sulfonsäure, 4-Hydroxy-6-benzoylaminonaphthalin-2-sulfonsäure oder 4-Hydroxy-6-phenylaminonaphthalin-2-sulfonsäure so erhält man ebenfalls Farbstoffe, die Papier, Baumwolle und Leder in blauen Tönen färben.

Beispiele 38-40

Unterwirft man, wie in Beispiel 28 beschrieben, die Farbstoffe aus den Beispielen 31, 33 und 35 ebenfalls einer alkalischen Verseifung, so erhält man Farbstoffe, die Baum- und Zellwolle, Papier und Leder in blauen Tönen färben.

Beispiel 41

46,2 g der Verbindung der Formel

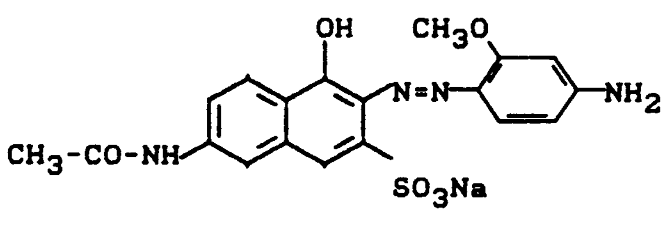

g

werden in
800 ml Wasser neutral gelöst und mit
10 g $NaNO_2$ versetzt; diese Lösung läßt man bei 0-5 ° C in eine Vorlage von
50 ml konzentrierter Salzsäure und
200 g Eis eintropfen.
34,1 g 4-Hydroxy-5-aminonaphthalin-2,7-disulfonsäuremono-Natriumsalz werden in
500 ml Wasser bei 10 ° C neutral gelöst; zu dieser Lösung läßt man die Suspension der Diazoniumverbindung zutropfen, wobei man den pH-Wert mit Hilfe von Sodalösung auf 8,5-9 hält. Nach Beendigung der

Kupplung setzt man
64 g NaOH zu und erwärmt drei Stunden auf 95 °C, wobei der Acetylrest abgespalten wird. Die Lösung wird mit Salzsäure neutralisiert und mit
350 g Salz versetzt. Der auskristallisierte Farbstoff wird auf einer Nutsche isoliert, die Paste wird in
900 ml Wasser mit
40 g LiOH + $H_2O$ gelöst. Man erhält eine Lösung eines Farbstoffs der Papier, Baumwolle und Leder in blauen Tönen anfärbt.

Beispiel 42

51,4 g der Verbindung der Formel

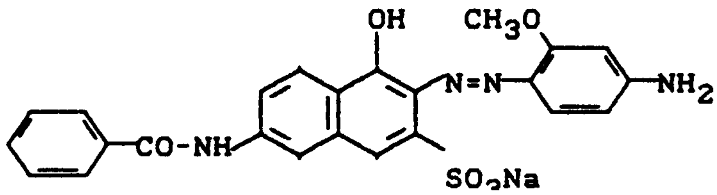

h

werden in
2000 ml Wasser neutral gelöst und mit
10 g $NaNO_2$ versetzt; diese Lösung läßt man bei 0-5 °C in eine Vorlage von
50 ml konzentrierter Salzsäure und
500 g Eis eintropfen.
34,1 g 4-Hydroxy-5-aminonaphthalin-2,7-disulfonsäuremono-Natriumsalz werden in
500 ml Wasser bei 10 °C neutral gelöst; zu dieser Lösung läßt man die Suspension der Diazoniumverbindung zutropfen, wobei man den pH-Wert mit Hilfe von Sodalösung auf 8,5-9 hält. Der Farbstoff wird bei 60 °C durch Zugabe von
450 g Salz ausgefällt, isoliert und getrocknet. Er färbt Baum- und Zellwolle, Papier und Leder in blauen Tönen.

Beispiel 43

Verwendet man statt dem in Beispiel 41 eingesetzten 4-Hydroxy-5-aminonaphthalin-2,7-disulfonat eine äquimolare Menge 5-Hydroxy-2-amino-naphthalin-1,7-disulfonat, so erhält man ebenfalls einen Farbstoff, der Papier, Baumwolle und Leder in blauen Tönen anfärbt.

**Patentansprüche**

1. Verfahren zum Färben von cellulosehaltigen Materialien und Leder mit Farbstoffen der allgemeinen Formel

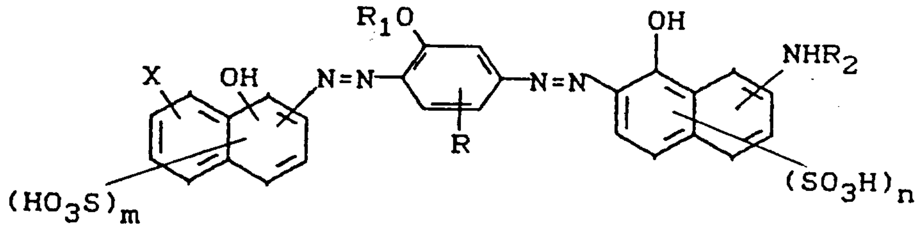

oder

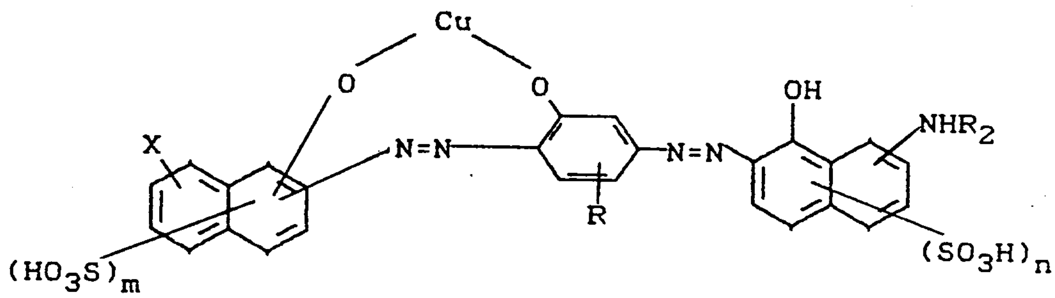

und deren Salzen, worin

- X Wasserstoff, Alkoxy oder $NHR_3$,
- R Wasserstoff,
- $R_1$ Alkyl,
- $R_2$ Wasserstoff, Aryl,
- $R_3$ Wasserstoff, Alkyl, Alkylcarbonyl, Alkylsulfonyl, Aryl, Arylcarbonyl, Arylsulfonyl, Aralkyl, Aralkylcarbonyl oder Aminocarbonyl

und

m und n 1 oder 2 bedeuten, und die Summe von m und n mindestens 3 ist, und worin die genannten Substituenten ihrerseits durch in der Farbstoffchemie übliche nichtionische Reste, Carbon- und Sulfonsäuregruppen substituiert sein können.

**2.** Verfahren nach Anspruch 1, dadurch gekennzeichnet, daß man mit Farbstoffen der allgemeinen Formel

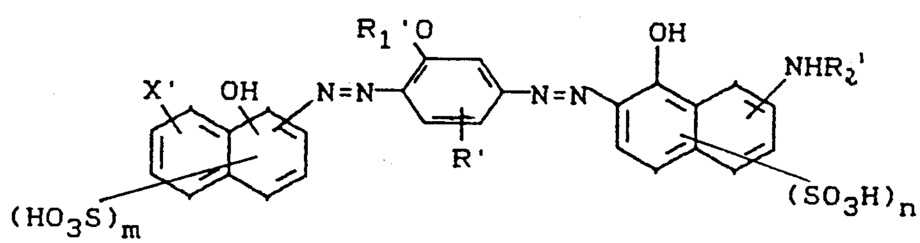

oder

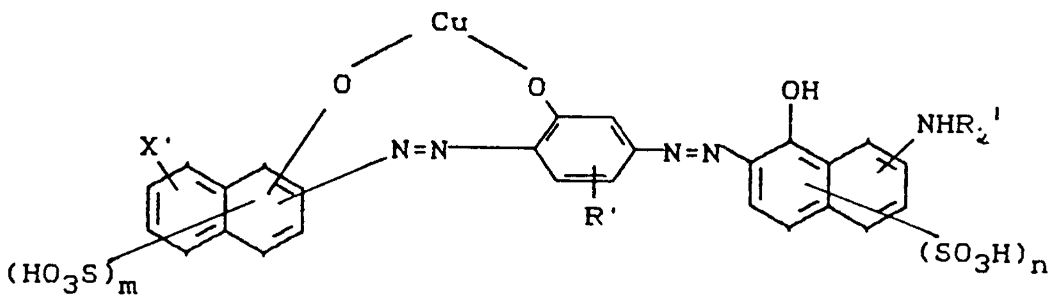

und deren Salzen,
worin

- R' Wasserstoff,
- $R_1$' $C_1$-$C_4$-Alkyl,
- X' Wasserstoff, $C_1$-$C_2$-Alkoxy oder $NHR_3$'
- $R_2$' Wasserstoff oder Phenyl,
- $R_3$' Wasserstoff, $C_1$-$C_4$-Alkyl, $C_1$-$C_4$-Alkylcarbonyl, $C_1$-$C_4$-Alkylsulfonyl, Phenylcarbonyl, Phenylsulfonyl oder Benzylcarbonyl, deren Phenylreste durch $SO_3H$ oder COOH substituiert sein können, oder Aminocarbonyl und

m und n 1 oder 2 bedeuten, und die Summe von m und n mindestens 3 ist,
färbt.

**3.** Farbstoffe der allgemeinen Formel

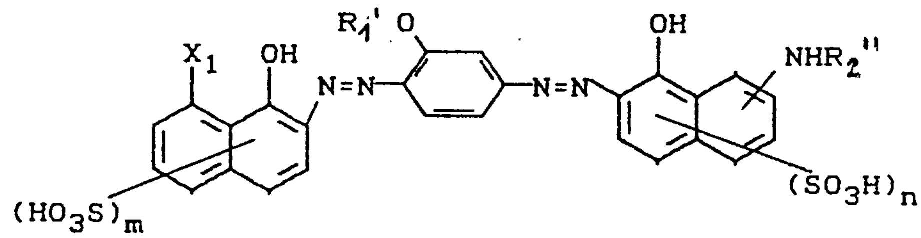

und

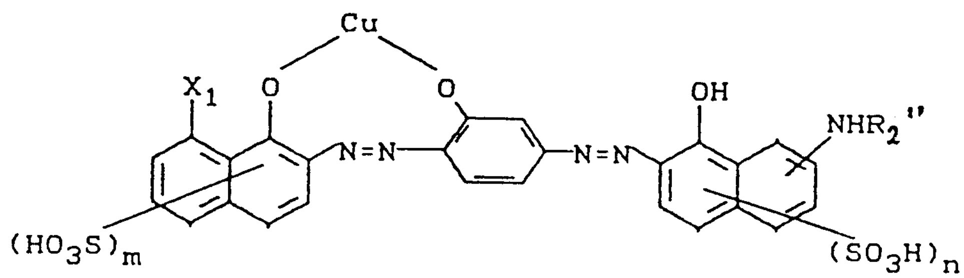

und ihre Salze,
worin

- $X_1$ Wasserstoff oder $C_1$-$C_4$-Alkoxy bedeuten, und $R_1$', m und n die in Anspruch 2 angegebene Bedeutung haben, und
- $R_2$'' Wasserstoff, $C_1$-$C_4$-Alkyl, $C_1$-$C_4$-Alkylcarbonyl, $C_1$-$C_4$-Alkylsulfonyl, Phenylcarbonyl, Phenylsulfonyl oder Benzylcarbonyl, deren Phenylreste durch $SO_3H$ oder COOH substituiert sein können, oder Aminocarbonyl bedeutet.

**4.** Farbstoffe gemäß Anspruch 3 der allgemeinen Formeln

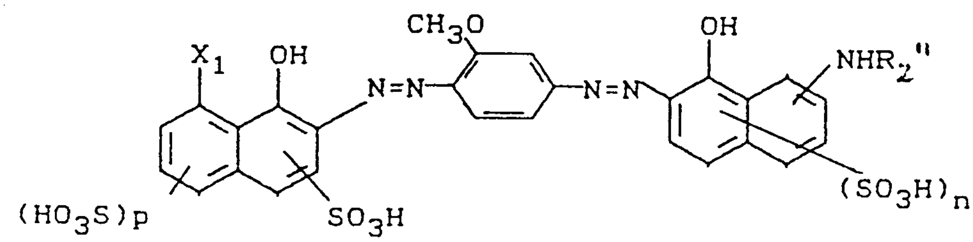

und

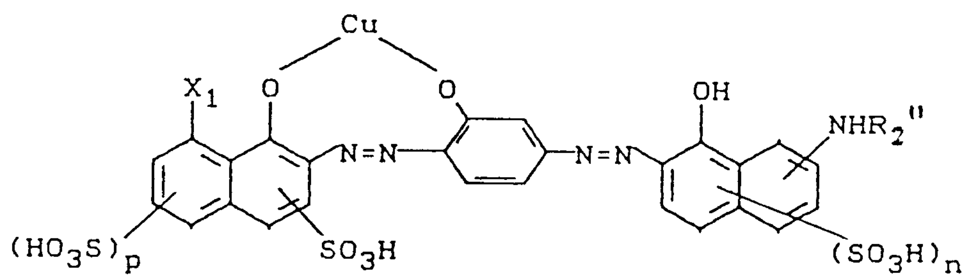

und ihre Salze,
worin

p für 0 oder 1 steht,

n + p 2 ist, und

$X_1$, $R_2$'' und n die Bedeutung des Anspruchs 3 haben.

**5.** Farbstoffe der allgemeinen Formeln

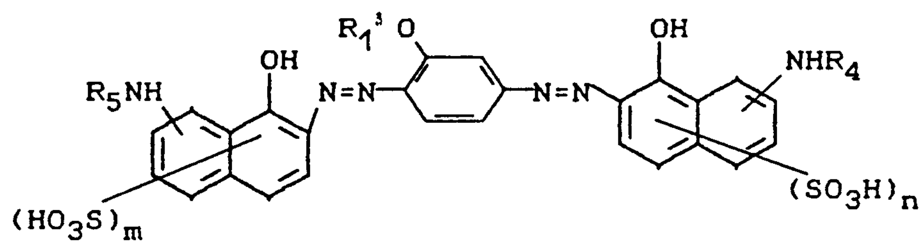

und

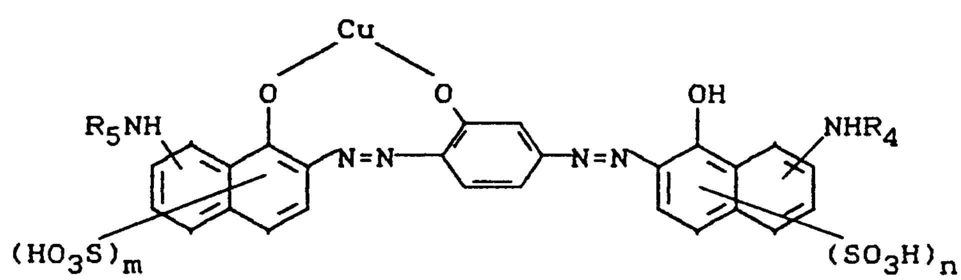

und ihre Salze,
worin

$R_4$ und $R_5$ für Wasserstoff, Acetyl, Benzoyl oder Phenyl stehen und

$R_1$', m und n die in Anspruch 2 angegebene Bedeutung haben.

6. Farbstoffe gemäß Anspruch 5 der allgemeinen Formeln

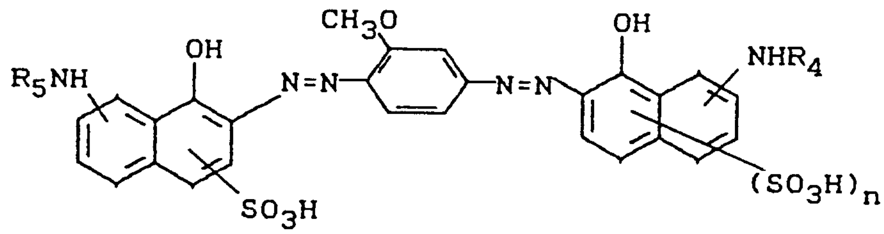

und

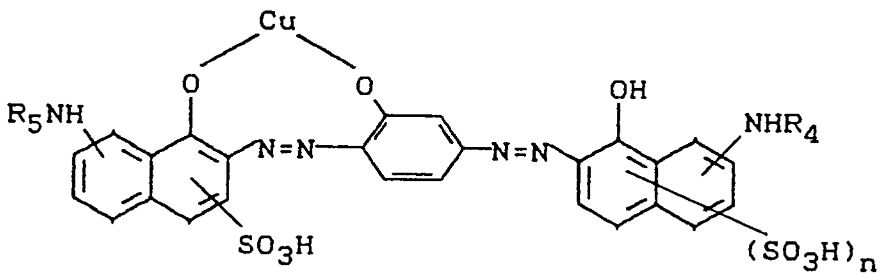

und ihre Salze,
worin
$R_4$, $R_5$ und n die Bedeutung von Anspruch 5 haben.

7. Verfahren zum Färben von cellulosehaltigen Materialien und Leder mit Farbstoffen des Anspruchs 3.

8. Verfahren zum Färben von cellulosehaltigen Materialien und Leder mit Farbstoffen des Anspruchs 5.

9. Verfahren zur Herstellung von Farbstoffen des Anspruchs 1, dadurch gekennzeichnet, daß man Verbindungen der allgemeinen Formel

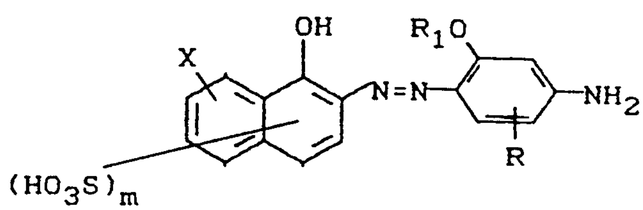

diazotiert und mit Verbindungen der allgemeinen Formel

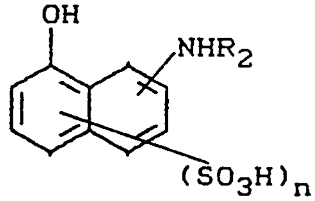

kuppelt und gegebenenfalls mit Kupfer-(II)-Salzen behandelt.

## Claims

1. Process for dyeing cellulose-containing materials and leather with dyestuffs of the general formula

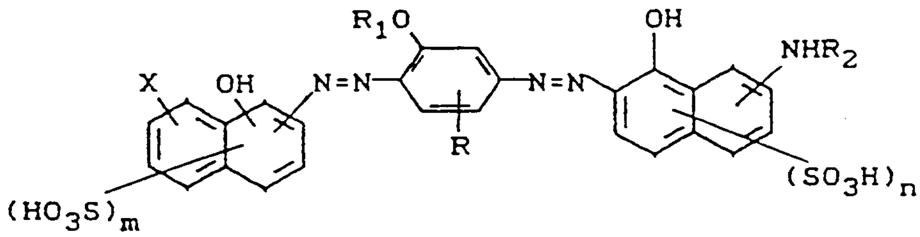

or

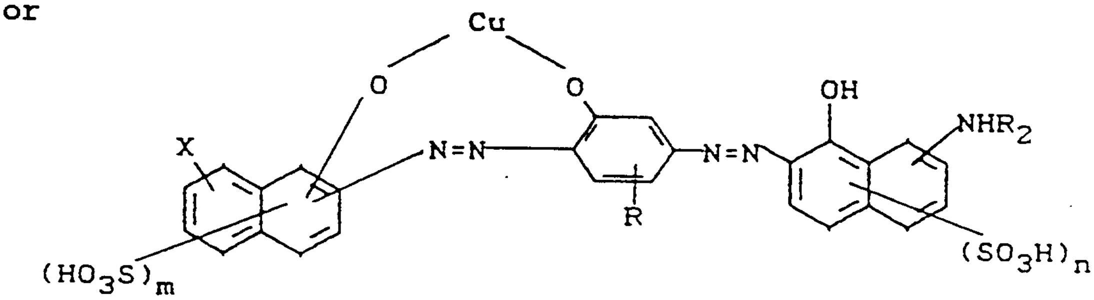

and salts thereof,
wherein

X denotes hydrogen, alkoxy or $NHR_3$,
R denotes hydrogen,
$R_1$ denotes alkyl,
$R_2$ denotes hydrogen or aryl,
$R_3$ denotes hydrogen, alkyl, alkylcarbonyl, alkylsulphonyl, aryl, arylcarbonyl, arylsulfonyl, aralkyl, aralkylcarbonyl or aminocarbonyl

and
m and n denote 1 or 2, and the sum of m and n is at least 3, and wherein the substituents mentioned can in turn be substituted by nonionic radicals and carboxylic and sulphonic acid groups customary in dyestuff chemistry.

2. Process according to Claim 1, characterized in that dyeing is carried out with dyestuffs of the general formula

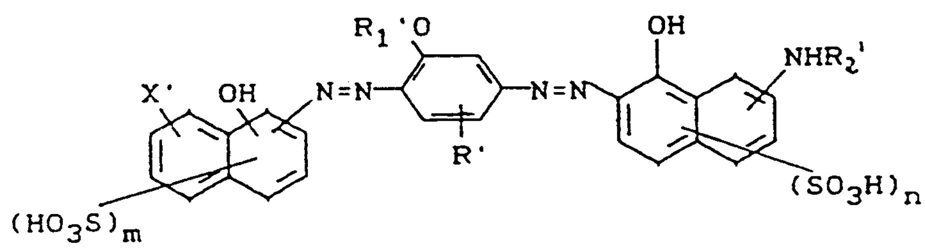

or

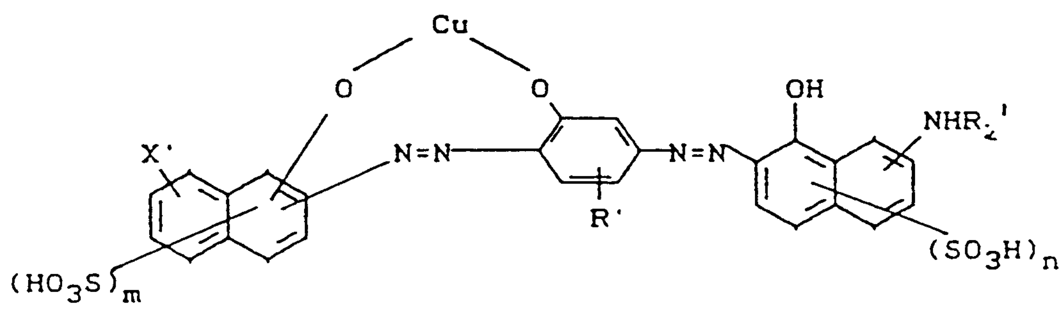

and salts thereof,
wherein

- R' denotes hydrogen,
- $R_1$' denotes $C_1$-$C_4$-alkyl,
- X' denotes hydrogen, $C_1$-$C_2$-alkoxy or $NHR_3$',
- $R_2$' denotes hydrogen or phenyl,
- $R_3$' denotes hydrogen, $C_1$-$C_4$-alkyl, $C_1$-$C_4$-alkylcarbonyl, $C_1$-$C_4$-alkylsulphonyl,phenylcarbonyl,phenylsulphonyl or benzylcarbonyl, the phenyl radicals of which can be substituted by $SO_3H$ or COOH, or aminocarbonyl and

m and n denote 1 or 2, and the sum of m and n is at least 3.

**3.** Dyestuffs of the general formula

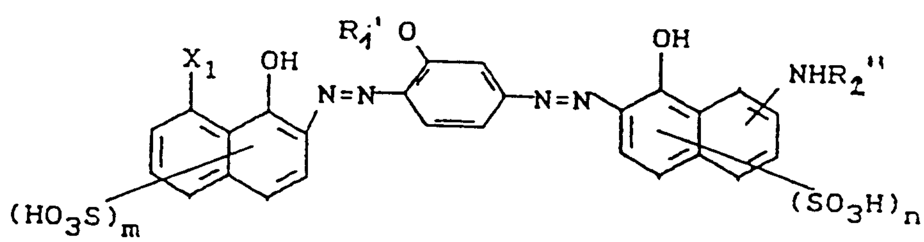

and

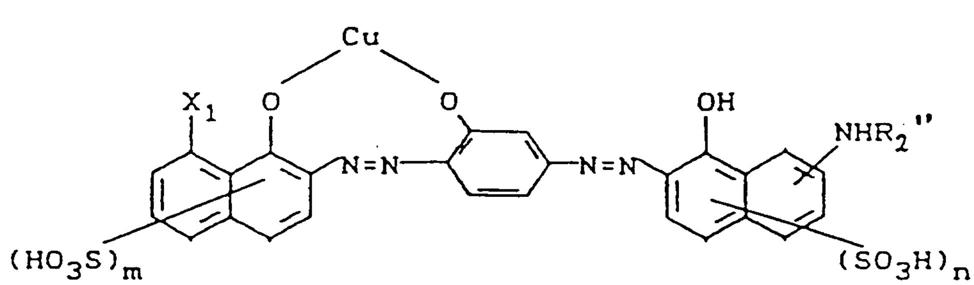

and salts thereof,
wherein

- $x_1$ denotes hydrogen or $C_1$-$C_4$-alkoxy and $R_1$', m and n have the meaning given in Claim 2, and

$R_2$'' denotes hydrogen, $C_1$-$C_4$-alkyl, $C_1$-$C_4$-alkylcarbonyl, $C_1$-$C_4$-alkylsulphonyl,phenylcarbonyl,phenylsulphonyl or benzylcarbonyl, the phenyl radicals of which can be substituted by $SO_3H$ or COOH, or aminocarbonyl.

**4.** Dyestuffs according to Claim 3 of the general formulae

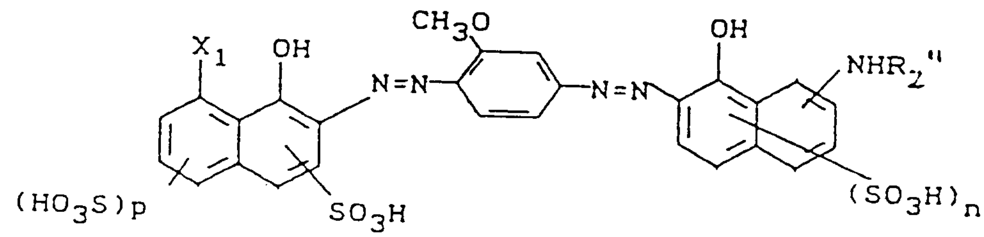

and

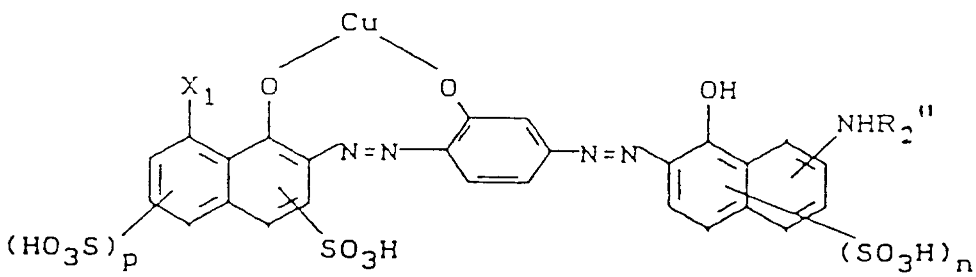

and their salts,
wherein

p represents 0 or 1,
n + p is 2, and
$X_1$, $R_2$'' and n have the meaning of Claim 3.

**5.** Dyestuffs of the general formulae

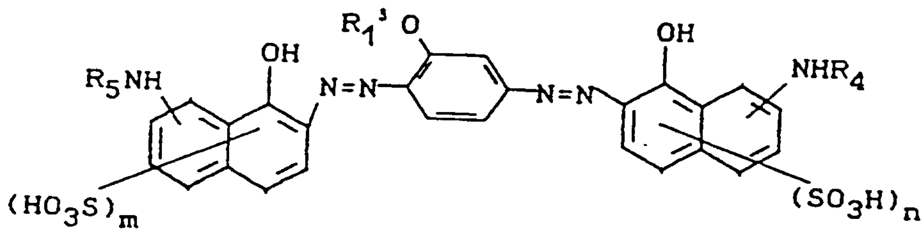

and

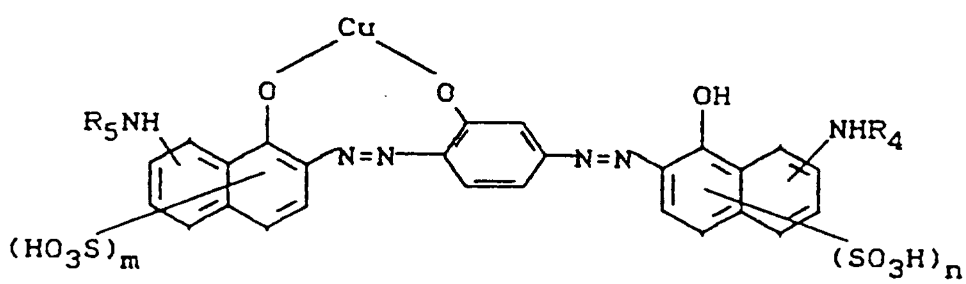

and their salts,
wherein

$R_4$ and $R_5$ represent hydrogen, acetyl, benzoyl or phenyl and
$R_1$', m and n have the meaning given in Claim 2.

**6.** Dyestuffs according to Claim 5 of the general formulae

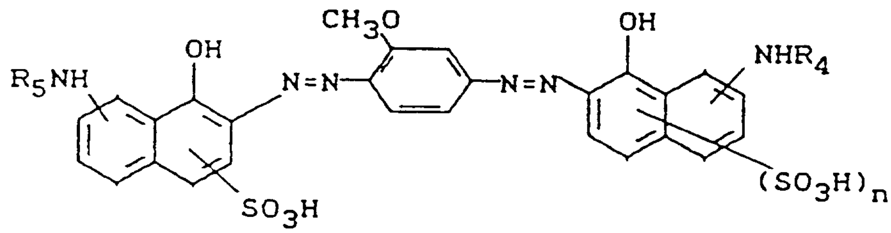

and

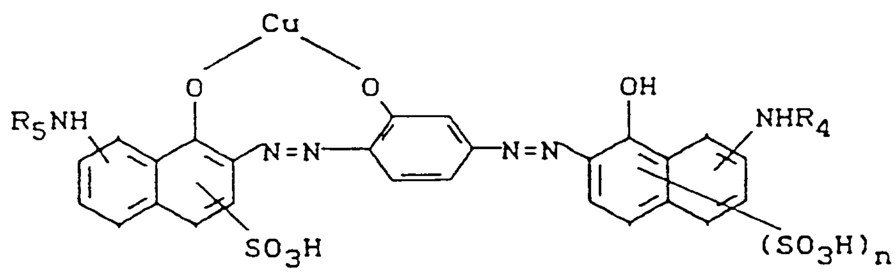

and their salts,
wherein
$R_4$, $R_5$ and n have the meaning of Claim 5.

**7.** Process for dyeing cellulose-containing materials and leather with dyestuffs of Claim 3.

**8.** Process for dyeing cellulose-containing materials and leather with dyestuffs of Claim 5.

**9.** Process for the preparation of dyestuffs of Claim 1, characterized in that compounds of the general formula

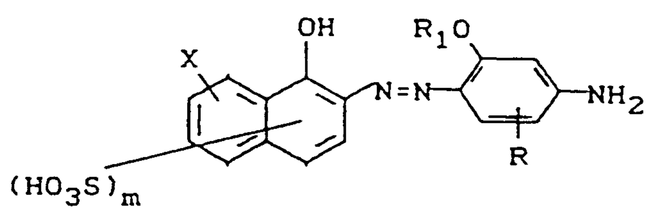

are diazotized and the diazotization products are coupled with compounds of the general formula

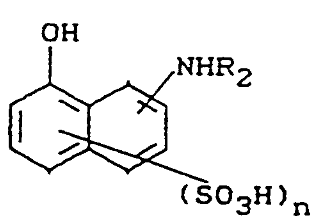

and if appropriate treated with copper (II) salts.

## Revendications

1. Procédé pour colorer des matériaux contenant de la cellulose et du cuir à l'aide des colorants de formules générales :

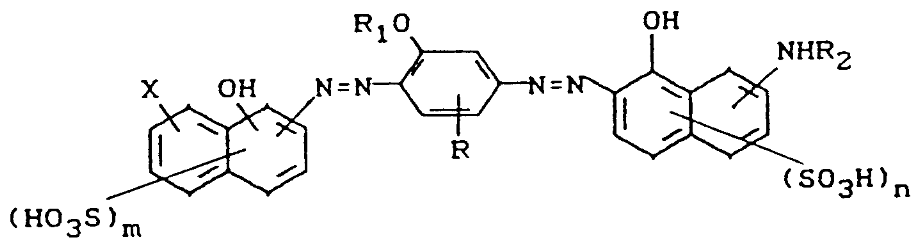

et

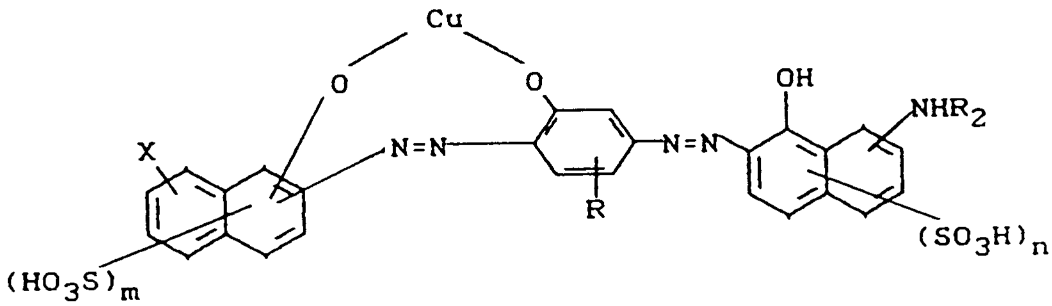

et leurs sels, dans lesquelles
X est un hydrogène, un alcoxy ou un $NHR_3$,
R est un hydrogène,
$R_1$ est un alkyle,
$R_2$ est un hydrogène, un aryle,
$R_3$ est un hydrogène, un alkyle, un alkylcarbonyle, un alkylsulfonyle, un aryle, un arylcarbonyle, un arylsulfonyle, un aralkyle, un aralkylcarbonyle ou un aminocarbonyle,
et
m et n représentent 1 ou 2, et la somme de m et de n représente au moins 3, et dans lesquelles les substituants cités peuvent être substitués à leur tour par des radicaux non ioniques habituels en chimie des colorants, des groupes acides carboxyliques et sulfoniques.

2. Procédé selon la revendication 1, caractérisé en ce qu'on colore avec des colorants de formule générale :

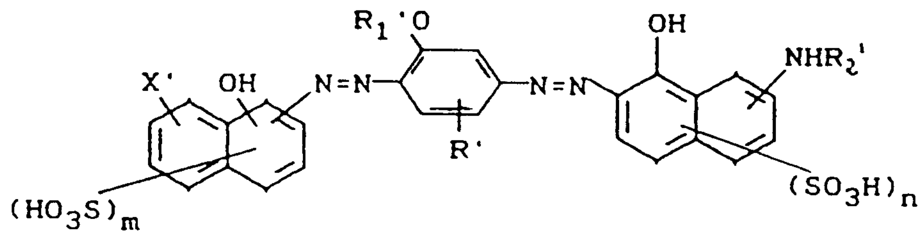

ou

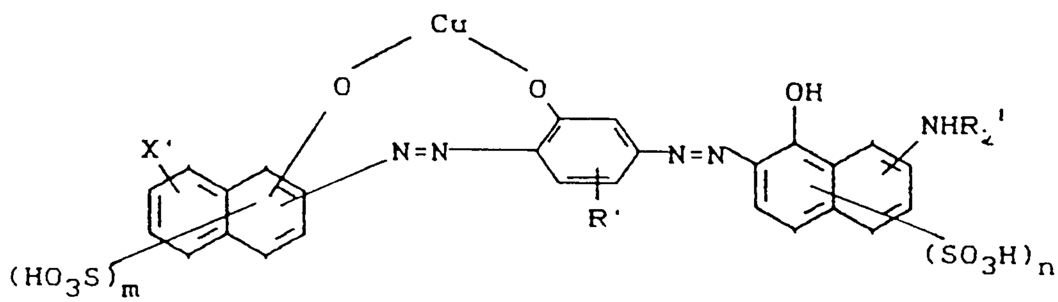

et leurs sels, dans lesquelles
R' est un hydrogène,
$R_1$' est un alkyle $C_1$-$C_4$,
X' est un hydrogène, un alcoxy $C_1$-$C_2$ ou un $NHR_3$',
$R_2$' est un hydrogène ou un phényle,
$R_3$' est un hydrogène, alkyle $C_1$-$C_4$, alkylcarbonyle $C_1$-$C_4$, alkylsulfonyle $C_1$-$C_4$, un phénylcarbonyle, un phénylsulfonyle ou un benzylcarbonyle, dont les radicaux phényles peuvent être substitués par $SO_3H$ ou COOH, ou un aminocarbonyle et
m et n représentent 1 ou 2, et la somme de m et n représente au moins 3.

**3.** Colorants de formules générales :

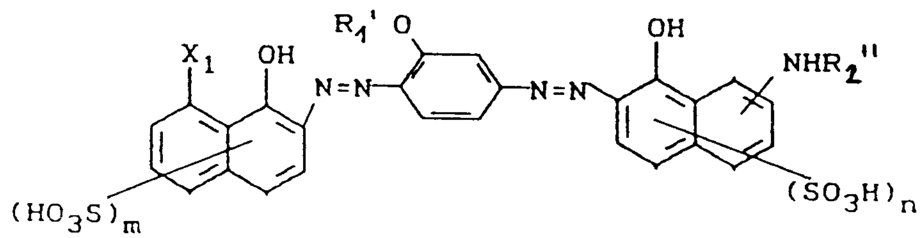

et

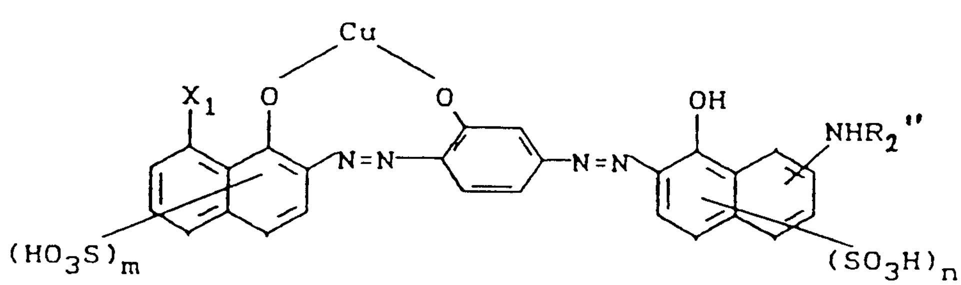

et leurs sels,

dans lesquelles
$X_1$ représente un hydrogène ou un alcoxy $C_1$-$C_4$, et $R_1$', m et n ont la signification donnée à la revendication 2, et
$R_2$'' représente un hydrogène, un alkyle $C_1$-$C_4$, un alkylcarbonyle $C_1$-$C_4$, un alkylsulfonyle $C_1$-$C_4$, un phénylcarbonyle, un phénylsulfonyle ou un benzylcarbonyle, dont les radicaux phényles peuvent être substitués par $SO_3H$ ou COOH, ou un aminocarbonyle.

**4.** Colorants selon la revendication 3, de formules générales :

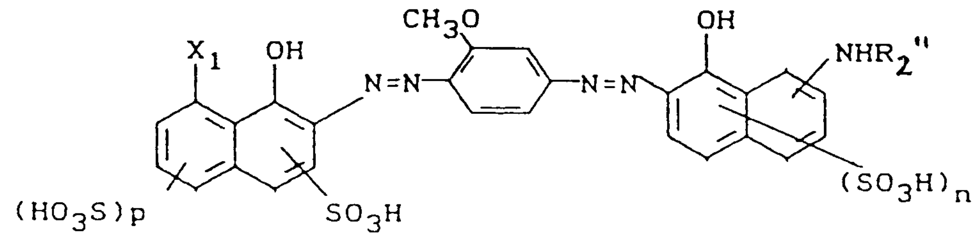

et

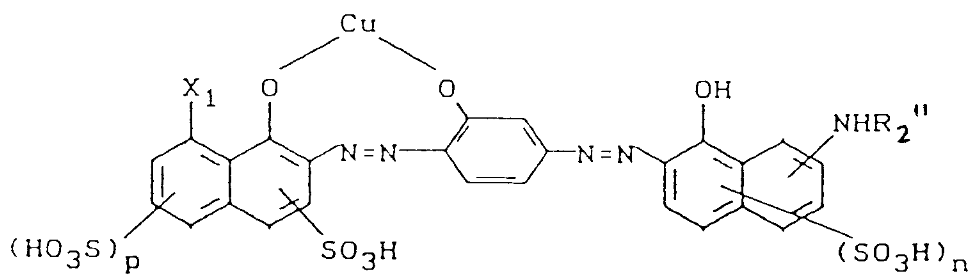

et leurs sels,
dans lesquelles
p représente 0 ou 1,
n + p représente 2, et
$X_1$, $R_2$'' et n ont la signification donnée à la revendication 3.

**5.** Colorants de formules générales :

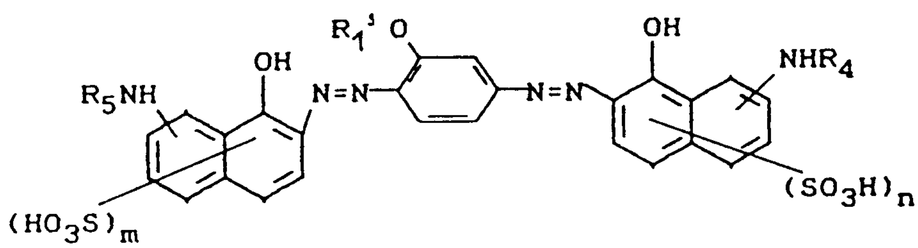

et

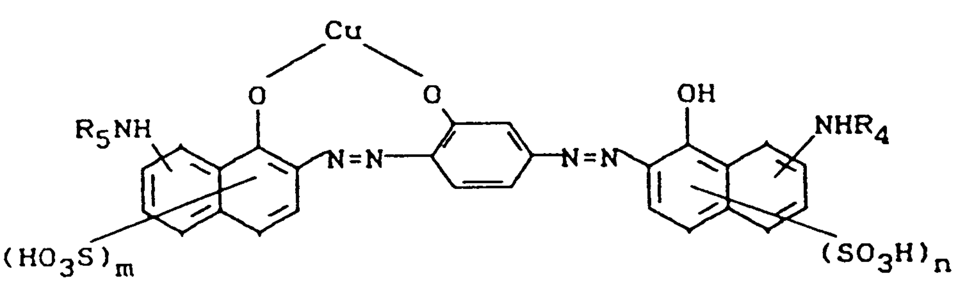

et leurs sels,
dans lesquelles
$R_4$ et $R_5$ représentent un hydrogène, un acétyle, un benzoyle ou un phényle et $R_1'$, m et n ont les significations données à la revendication 2.

6. Colorants selon la revendication 5 de formules générales :

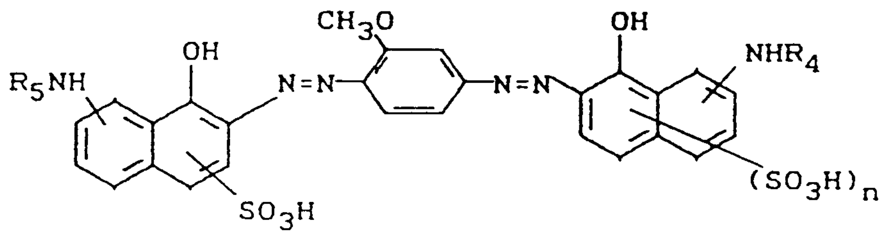

et

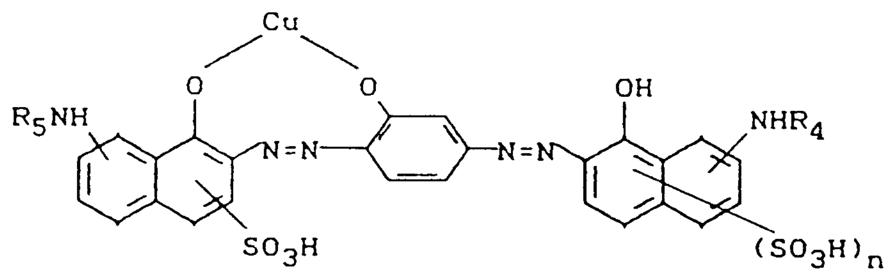

et leurs sels,
dans lesquelles
$R_4$, $R_5$ et n ont la signification de la revendication 5.

7. Procédé pour colorer des matériaux contenant de la cellulose et du cuir avec des colorants selon la revendication 3.

8. Procédé pour colorer des matériaux contenant de la cellulose et du cuir avec les colorants de la revendication 5.

9. Procédé de préparation de colorants de la revendication 1, caractérisé en ce qu'on diazote des composés de formule générale :

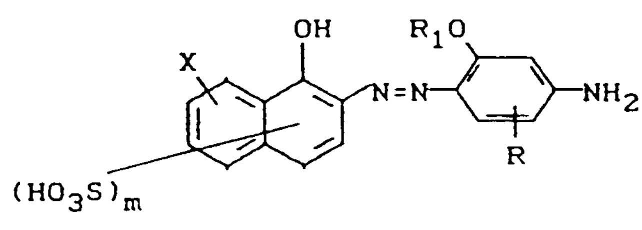

et on copule avec des composés de formule générale :

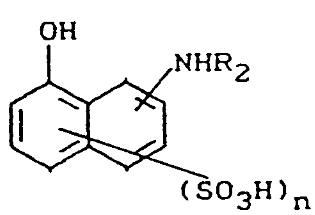

et le cas échéant, on traite avec des sels de cuivre (II).